# EUROPÄISCHE PATENTSCHRIFT

(11) **EP 2 027 339 B1**
(45) Veröffentlichungstag und Bekanntmachung des Hinweises auf die Patenterteilung: **19.06.2013**
(21) Anmeldenummer: 07724400.2
(22) Anmeldetag: 20.04.2007
(51) Int. Cl.: E01B 29/42, E01B 11/50, B23K 11/00

(54) **VERFAHREN ZUM VERSCHWEISSEN VON SCHIENENENDEN SOWIE SCHWEISSMASCHINE**
METHOD FOR WELDING RAIL ENDS AS WELL AS WELDING MACHINE
PROCÉDÉ DE SOUDAGE D'EXTRÉMITÉS DE RAILS ET MACHINE À SOUDER

(30) Priorität: 22.05.2006 AT 8832006
(43) Veröffentlichungstag der Anmeldung: 25.02.2009
(73) Patentinhaber: Franz Plasser Bahnbaumaschinen-Industriegesellschaft m.b.H., 1010 Wien (AT)
(72) Erfinder: THEURER, Josef, 1010 Wien (AT); PEITL, Friedrich, 4020 Linz (AT)
(86) Internationale Anmeldenummer: PCT/EP2007/003463
(87) Internationale Veröffentlichungsnummer: WO 2007/134676

(56) Entgegenhaltungen:
- AT-U2- 6 941
- DE-C- 624 428
- US-A- 5 270 514

## Beschreibung

Die Erfindung betrifft ein Verfahren zum Verschweißen von Schienenenden von auf Schwellen eines Gleises befestigten Schienen, wobei die Schienenenden im Bereich eines Schienensteges durch Klemmbacken eines Schweißaggregates erfasst sowie unter Stromzufuhr zusammengeschweißt werden und wobei die Oberfläche der Schienenenden vor der Schweißung vorbehandelt wird, sowie eine Schweißmaschine.

Schweißmaschinen zur Durchführung des obgenannten Verfahrens werden in der Fachzeitschrift "Rail Engineering International" 2002/3, Seiten 11 bis 16, ausführlich beschrieben. Ein wesentliches Qualitätskriterium für die Durchführung einer Abbrennstumpfschweißung ist ein guter Kontakt der als Elektroden wirksamen Klemmbacken an den zu verschweißenden Schienenenden. Mit Walzhaut, Rost oder anderen Verunreinigungen behaftete Oberflächen können zu einer Beeinträchtigung der Schweißqualität führen. In der US-A-5270514 wird im Rahmen eines Schweißverfahrens zum Abbrennstumpfschweißen von Schienen mittels einer stationären Schweißmaschine beschrieben, dass vor dem Einführen der Schienen in die Maschine die Ober- und Unterseiten von Schienenkopf und -fuß nächst den Schienenenden durch Schleifen oder mittels einer Drahtbürste gereinigt werden, um guten Kontakt für die Elektroden zu gewährleisten.

In der AT-U-006 941 wird ein Schweißaggregat gemäß dem Oberbegriff des Anspruchs 1 offenbart.

Die Aufgabe der vorliegenden Erfindung liegt nun in der Schaffung eines Verfahrens der eingangs genannten Art, mit dem die Schweißqualität verbesserbar ist.

Diese Aufgabe wird erfindungsgemäß mit einem Verfahren nach Anspruch 1 dadurch erreicht, dass die Schienenenden jeweils im Bereich des Schienensteges durch eine Oberflächenstrahlung gestrahlt werden, wobei ein an den Schienensteg anschließender Schienenkopf abgedeckt wird.

Mit dieser Behandlung ist durch Entfernung von Walzhaut, Zunder, Rost und eventuellen artfremden Verunreinigungen eine qualitativ konstante Oberfläche der zu verschweißenden Schienenenden gewährleistet. Damit ist für die als Elektroden wirksamen Klemmbacken des Schweißaggregates eine optimale elektrische Leitfähigkeit als Grundlage für eine vom Schienenzustand unabhängige, hochwertige Schweißung gegeben.

Eine weitere Aufgabe der vorliegenden Erfindung liegt auch in der Schaffung einer Schweißmaschine, mit der unter lediglich geringem konstruktivem Mehraufwand eine verbesserte Schweißqualität erzielbar ist.

Diese Aufgabe wird erfindungsgemäß mit einer Schweißmaschone nach Anspruch 4 dadurch erreicht, dass eine von der Energieeinheit mit Energie versorgbare Strahlanlage mit einem auf die Schienenenden aufsetzbaren Strahlkopf zur Oberflächenbehandlung der Schienenenden vorgesehen ist und der Strahlkopf Leitungen für eine Zu- und Abführung eines Strahlmediums von bzw. zu einem auf dem Maschinenrahmen angeordneten Behälter aufweist.

Eine derartig ausgestattete Schweißmaschine ermöglicht die Herstellung gleichwertiger, vom Oberflächenzustand der Schienenenden unabhängiger Schweißungen. Dabei ist auch von Vorteil, dass bereits im Einsatz befindliche Maschinen mit lediglich geringem Aufwand nachrüstbar sind.

Weitere Vorteile der Erfindung ergeben sich aus den Unteransprüchen und der Zeichnungsbeschreibung.

Im folgenden wird die Erfindung anhand eines in der Zeichnung dargestellten Ausführungsbeispieles näher beschrieben. Es zeigen:

Fig. 1 eine Teilansicht einer Schweißmaschine mit einem Schweißaggregat und einer Strahlanlage zur Oberflächenbehandlung von Schienenenden, sowie

Fig. 2 und 3 je eine vergrößerte Ansicht eines auf die Schienenenden aufsetzbaren Strahlkopfes.

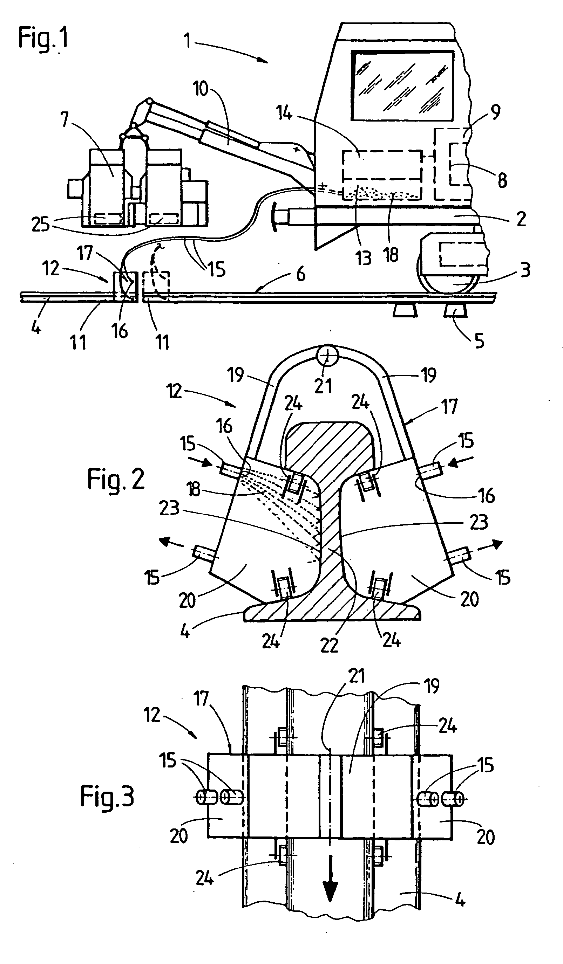

Eine in Fig. 1 ersichtliche Schweißmaschine 1 weist einen Maschinenrahmen 2 auf und ist durch Schienenfahrwerke 3 auf einem aus Schienen 4 und Schwellen 5 gebildeten Gleis 6 verfahrbar. Zur Versorgung eines Schweißaggregates 7 mit elektrischer Energie ist eine durch einen Motor 8 betreibbare Energieeinheit 9 vorgesehen. Das Schweißaggregat 7 ist durch einen Teleskopkran 10 relativ zum Maschinenrahmen 2 verstell- und auf zwei Schienenenden 11 aufsetzbar, um diese durch eine Abbrennstumpfschweißung miteinander zu verschweißen.

Als weitere Ausstattung der Schweißmaschine 1 ist eine Strahlanlage 12 mit einem Behälter 13 zur Speicherung eines Strahlgutes 18 und einer Kompressoranlage 14 am Maschinenrahmen 2 gelagert. Diese wird von der Energieeinheit 9 mit elektrischer Energie versorgt. Die Strahlanlage 12 steht über Leitungen 15 mit einem Strahldüsen 16 aufweisenden Strahlkopf 17 in Verbindung.

Der Strahlkopf 17 weist zwei in Schienenquerrichtung einander gegenüberliegende und durch eine Halterung 19 miteinander verbundene Hohlkammern 20 auf. Die Halterungen 19 sind mitsamt den Hohlkammern 20 um eine in Schienenlängsrichtung verlaufende Achse 21 zueinander verschwenkbar. Jede Hohlkammer 20 weist eine zur Anlage an einen Schienensteg 22 der Schienenenden 11 vorgesehene Strahlöffnung 23 auf. Der Strahlkopf 20 ist über Rollen 24 auf dem Schienenende 11 abstütz- und in Schienenlängsrichtung verschiebbar.

Sobald die Schweißmaschine 1 neben den beiden miteinander zu verschweißenden Schienenenden 11 abgestellt ist, wird der Strahlkopf 17 oberhalb eines Schienenendes 11 positioniert und auf dieses aufgesetzt. Dabei werden die beiden Hohlkammern 20 zueinander bewegt, bis diese am Schienensteg 22 anliegen. Anschließend wird die Strahlanlage 12 eingeschaltet und damit Strahlgut 18 über die entsprechenden Leitungen 15 den beiden Strahldüsen 16 zugeführt. Parallel dazu wird das Strahlgut 18 über die jeweiligen Leitungen 15 abgesaugt.

Durch Erfassen der Halterung 19 wird der Strahlkopf 17 dem Schienenende 11 entlang geführt, bis dessen Ende erreicht ist. Dadurch kann eine der Breite von Klemmbacken 25 des Schweißaggregates 7 entsprechender Abschnitt des Schienensteges 22 einer Strahlung und Oberflächenbehandlung zugeführt werden. Alternativ kann natürlich der Strahlkopf 17 in einer den Klemmbacken 25 entsprechenden Breite ausgebildet werden. Anschließend wird der Strahlkopf 17 auf das andere Schienenende 11 aufgesetzt, um auch dieses auf die beschriebene Art zu behandeln.

Nach Entfernung des Strahlkopfes 17 wird das Schweißaggregat 7 auf die beiden vorbehandelten Schienenenden 11 aufgesetzt und die Abbrennstumpfschweißung durchgeführt.

## Patentansprüche

1. Verfahren zum Verschweißen von Schienenenden (11) von auf Schwellen (2) eines Gleises befestigten Schienen (4), wobei die Schienenenden (11) im Bereich eines Schienensteges (22) durch Klemmbacken (25) eines Schweißaggregates (7) erfasst sowie unter Stromzufuhr zusammengeschweißt werden, und wobei die Oberfläche der Schienenenden (11) vor der Schweißung vorbehandelt wird,
**dadurch gekennzeichnet, dass** die Schienenenden (11) jeweils im Bereich des Schienensteges (22) durch eine Oberflächenstrahlung gestrahlt werden, wobei ein an den Schienensteg (22) anschließender Schienenkopf abgedeckt wird.

2. Verfahren nach Anspruch 1, **dadurch gekennzeichnet, dass** ein auf die Schienenenden (11) gestrahltes Strahlgut (18) zur Bildung eines geschlossenen Kreislaufes aufgesaugt wird.

3. Verfahren nach Anspruch 1 oder 2, **dadurch gekennzeichnet, dass** ein Strahlkopf (17) mit dem Schienenende (11) verbunden und das Strahlgut (18) innerhalb des Strahlkopfes (17) auf den Schienensteg (22) gestrahlt wird.

4. Schweißmaschine (1) mit einem auf Schienenfahrwerken (3) verfahrbaren Maschinenrahmen (2), einer durch einen Motor (8) betreibbaren Energieeinheit (9) und einem relativ zum Maschinenrahmen (2) verstellbaren Schweißaggregat (7) zum Verschweißen von zwei Schienenenden (11) einer Schiene (4) eines Gleises (6), **dadurch gekennzeichnet, dass** eine von der Energieeinheit (9) mit Energie versorgbare Strahlanlage (12) mit einem auf die Schienenenden (11) aufsetzbaren Strahlkopf (17) zur Oberflächenbehandlung der Schienenenden (11) vorgesehen ist und der Strahlkopf (17) Leitungen (15) für eine Zu- und Abführung eines Strahlgutes (18) von bzw. zu einem auf dem Maschinenrahmen (2) angeordneten Behälter (13) aufweist.

5. Maschine nach Anspruch 4, **dadurch gekennzeichnet, dass** der Strahlkopf (17) zwei zueinander verstellbare Hohlkammern (20) mit je einer - zur Anlage an einen zwischen den Hohlkammern (20) positionierten Schienensteg (22) vorgesehenen - Strahlöffnung (23) aufweist.

## Claims

1. A method of welding rail ends (11) of rails (4) fastened to sleepers (2) of a track, wherein the rail ends (11) are gripped in the region of a rail web (22) by clamping jaws (25) of a welding unit (7) and welded together while current is supplied, and wherein the surface of the rail ends (11) is pre-treated prior to the welding, **characterized in that** the rail ends (11) are blasted by surface blasting in the region of the rail web (22), respectively, during which a rail head adjoining the rail web (22) is covered.

2. A method according to claim 1, **characterized in that** a blasting material (18) blasted upon the rail ends (11) is aspirated for forming a closed circuit.

3. A method according to claim 1 or 2, **characterized in that** a blasting head (17) is connected to the rail end (11), and the blasting material (18) is blasted onto the rail web (22) within the blasting head (17).

4. A welding machine (1), having a machine frame (2) mobile on on-track undercarriages (3), a power plant (9) operable by a motor (8), and a welding unit (7) displaceable relative to the machine frame (2) for welding two rail ends (11) of a rail (4) of a track (6), **characterized in that** a blasting installation (12) is provided which can be powered by the power plant (9) and has a blasting head (17), designed to be placed upon the rail ends (11), for surface treatment of the rail ends (11), and that the blasting head (17) comprises conduits (15) for providing and removing a blasting medium (18) to or from a container (13) arranged on the machine frame (2).

5. A machine according to claim 4, **characterized in that** the blasting head (17) comprises two hollow chambers (20), adjustable with respect to one another, each having a blast opening (23) provided to be applied to a rail web (22) positioned between the hollow chambers (20).

## Revendications

1. Procédé de soudure d'extrémités de rails (11) de rails (4) fixés sur des traverses (2) d'une voie ferrée, dans lequel les extrémités de rails (11) sont saisies dans la région d'une âme de rail (22) par des mâchoires de serrage (25) d'un module de soudure (7) ainsi que soudées ensemble avec une arrivée de courant et dans lequel la surface des extrémités de rails (11) est traitée au préalable avant la soudure,
**caractérisé en ce que** les extrémités de rails (11) sont chacune irradiées dans la région de l'âme de rail (22) par un rayonnement superficiel, dans lequel une tête de rail adjacente à l'âme de rail (22) est recouverte.

2. Procédé selon la revendication 1, **caractérisé en ce qu'**un produit de rayonnement (18) irradiée sur les extrémités de rails (11) est aspiré pour la formation d'un circuit fermé.

3. Procédé selon la revendication 1 ou 2, **caractérisé en ce qu'**une tête de rayonnement (17) est reliée à l'extrémité de rail (11) et le produit de rayonnement (18) est irradié au sein de la tête de rayonnement (17) sur l'âme de rail (22).

4. Machine de soudure (1) comprenant un châssis de machine (2) pouvant être déplacé sur des mécanismes de roulement ferroviaires (3), un module électrique (9) pouvant être exploité par un moteur (8) et un module de soudure (7) pouvant être réglé par rapport au châssis de machine (2) pour souder deux extrémités de rails (11) d'un rail (4) d'une voie ferrée (6), **caractérisée en ce qu'**une installation de rayonnement (12) pouvant être alimentée électriquement par le module électrique (9) est pourvue d'une tête de rayonnement (17) pouvant être posée sur les extrémités de rails (11) pour le traitement superficiel des extrémités de rails (11) et la tête de rayonnement (17) présente des conduites (15) pour une amenée et évacuation d'un produit de rayonnement (18) de ou vers un récipient (13) disposé sur le châssis de machine (2).

5. Machine selon la revendication 4, **caractérisée en ce que** la tête de rayonnement (17) présente deux chambres creuses (20) pouvant être réglées l'une par rapport à l'autre avec chacune une ouverture de rayonnement (23) prévue pour l'appui sur une âme de rail (22) positionnée entre les chambres creuses (20).
